(19) Europäisches Patentamt European Patent Office Office européen des brevets

(11) **EP 4 015 471 B1**

(12) **EUROPEAN PATENT SPECIFICATION**

(45) Date of publication and mention of the grant of the patent:
**26.03.2025 Bulletin 2025/13**

(21) Application number: **21214661.7**

(22) Date of filing: **15.12.2021**

(51) International Patent Classification (IPC):
**C03B 19/14** (2006.01) **C03B 20/00** (2006.01)

(52) Cooperative Patent Classification (CPC):
**C03B 19/1423;** C03B 2207/06; C03B 2207/32

(54) **METHOD FOR THE MANUFACTURE OF SYNTHETIC QUARTZ GLASS**

VERFAHREN ZUR HERSTELLUNG VON SYNTHETISCHEM QUARZGLAS

PROCÉDÉ DE PRÉPARATION DE VERRE DE QUARTZ SYNTHÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2020 EP 20214491**

(43) Date of publication of application:
**22.06.2022 Bulletin 2022/25**

(73) Proprietor: **Heraeus Quarzglas GmbH & Co. KG 63450 Hanau (DE)**

(72) Inventors:
• **THÜRER, Martin 06803 Bitterfeld-Wolfen (DE)**

• **LEHMANN, Walter 63801 Kleinostheim (DE)**
• **TROMMER, Martin 06803 Bitterfeld-Wolfen (DE)**

(74) Representative: **Gille Hrabal Partnerschaftsgesellschaft mbB Patentanwälte Brucknerstraße 20 40593 Düsseldorf (DE)**

(56) References cited:
**EP-A1- 0 622 340** **EP-A1- 3 549 921**
**EP-B1- 0 622 340** **WO-A1-99/20574**
**DE-B3- 102011 121 153**

**Description**

The present invention relates to a process for the production of synthetic quartz glass.

For the production of synthetic quartz glass, $SiO_2$ particles are generated from a silicon-containing starting substance in a CVD process by hydrolysis or oxidation and deposited on a moving carrier. A distinction can be made between external and internal deposition processes. In external deposition processes, the $SiO_2$ particles are deposited on the outside of a rotating carrier. Examples of such external deposition processes are the so-called OVD process (Outside Vapour Phase Deposition), the VAD process (Vapour Phase Axial Deposition) or the PECVD process (Plasma Enhanced Chemical Vapour Deposition). A well-known example of an internal deposition process is the MCVD process (Modified Chemical Vapor Deposition), in which $SiO_2$ particles are deposited on the inner wall of a tube heated from the outside.

At a sufficiently high temperature in the area of the carrier surface, the $SiO_2$ particles vitrify directly, which is also known as "direct vitrification". In contrast, in the so-called "soot process" the temperature during deposition of the $SiO_2$ particles is so low that a porous $SiO_2$ soot layer is obtained, which is then sintered to transparent quartz glass in a separate process step. Both the direct vitrification and the soot processes result in a dense, transparent, high-purity synthetic fused silica.

In the prior art processes for the production of synthetic fused silica, a method is usually used to ensure sufficient deposition efficiency of the $SiO_2$ particles, where deposition efficiency is understood to be the quotient of the weight of the soot body produced and the mathematically maximum amount of $SiO_2$ that can be produced, assuming complete conversion of the silicon from the silicon-containing starting compound used. These commonly used conditions include, first of all, a ratio of oxygen to fuel (= silicon-containing starting compound + fuel gases, e.g. for the pilot flame) that is as stoichiometric as possible in order to ensure essentially complete conversion to the desired target product. Furthermore, a stoichiometric ratio of oxygen to the oxidizable starting substances, i.e. a process with an air number of 1, results in a high conversion temperature, which is also said to be preferable for the efficiency of the process. In the prior art, the silicon-containing starting substance is regularly combusted with a turbulent flame, which ensures good mixing of the individual gases (in particular oxygen and silicon-containing starting compound) and at the same time causes rapid conversion to the desired silicon dioxide. Carbon soot formation in the flame is avoided as much as possible to prevent carbon soot deposition on the resulting soot body. Finally, the prior art processes are characterized by a certain minimum distance of the burner used from the deposition surface in order to be able to collect the material converted to $SiO_2$ as completely as possible on the soot body.

A corresponding process for the production of synthetic quartz glass is described, for example, in WO 90/10596 A, in which an excess of oxygen and thus an air number greater than 1 is used in conjunction with the above explanations.

EP 3 549 921 A discloses a manufacturing method of a porous glass preform for optical fibre by depositing glass microparticles on a starting member, including supplying a vaporizer with an organic silicon compound raw material in a liquid state and a carrier gas; in the vaporizer, mixing and vaporizing the organic silicon compound raw material in a liquid state and the carrier gas to convert the organic silicon compound raw material and the carrier gas into a raw material mixed gas; supplying a burner with the raw material mixed gas and a combustible gas, combusting the raw material mixed gas and the combustible gas in the burner, and ejecting SiO microparticles generated by the combustion from the burner; and depositing the SiO microparticles ejected from the burner on the starting member by repeatedly moving the vaporizer and the burner together, in a synchronized manner, parallel to the starting member in a longitudinal direction thereof.

EP 0 622 340 A describes a method for the preparation of a synthetic silica glass body in which a silane compound represented by the general formula

$$R_nSi(OR)_{4-n},$$

in which R is an aliphatic monovalent hydrocarbon group and the subscript n is zero or a positive integer not exceeding 4, is flame hydrolyzed in an oxyhydrogen flame formed on a concentrically multitubular burner nozzle consisting of a center nozzle and at least four ring nozzles comprising a first ring nozzle surrounding the center nozzle, a second ring nozzle surrounding the first ring nozzle, a third ring nozzle surrounding the second ring nozzle and a fourth ring nozzle surrounding the third ring nozzle, into which vapor of the silane compound, oxygen gas and hydrogen gas are introduced to form an oxyhydrogen flame and to effect flame hydrolysis of the silane compound in the oxyhydrogen flame, whereby the method comprises the following steps_

(a) introducing a gaseous mixture of vapor of the silane compound and oxygen into the center nozzle;

(b) introducing the oxygen gas into at least two ring nozzles including the first ring nozzle; and

(c) introducing the hydrogen gas into at least two ring nozzles including the second ring nozzle,

and wherein the total feed rate of the oxygen gas being in the range of at least 50% of but not exceeding 90% of the stoichiometrically equivalent amount required for complete combustion of the hydrogen gas and complete flame hydrolysis of the silane compound.

WO 99/20574 A discloses a method of forming a layer of high purity synthetic vitreous silica on the surface of a glass substrate having physical and/or chemical properties different from said high purity layer, by combusting a silica precursor in a burner and depositing the resulting silica on the surface of the glass substrate at a sufficiently high temperature that a coherent layer of pore-free vitreous silica is formed, without the need for subsequent sintering.

US 2019/0084866 A describes a process for the production of synthetic fused silica in which a silicon-containing starting compound is mixed with oxygen and fed as feedstock to a burner. It is thereby mentioned that the oxygen in the mixture with the silicon-containing starting compound is present in the feedstock in a sub-stoichiometric ratio, so that premature ignition of the mixture of silicon-containing starting compound and oxygen is avoided. However, the sub-stoichiometric ratio of oxygen to silicon-containing starting compound refers only to the feed stream of the mixture of silicon-containing starting compound and oxygen. The total amount of oxygen supplied, i.e. the amount of oxygen supplied to the burner together with the silicon-containing starting compound and separately, is superstoichiometric with respect to the silicon-containing starting compound.

DE 10 2011 121 153 A also describes a soot process for the production of synthetic quartz glass, in which a feedstock comprising a carbon-containing silicon compound is reacted with oxygen in a reaction zone to form $SiO_2$ particles, the $SiO_2$ particles are then deposited on a deposition surface to form a porous $SiO_2$ soot body containing carbon and hydroxyl groups, the porous $SiO_2$ soot body is dried and then vitrified. In this context, DE 10 2011 121 153 A states that the deposition efficiency of the silicon-containing starting substance octamethylcyclotetrasiloxane (OMCTS) is improved when working with an air number of less than 1, i.e. with an undersupply of oxygen up to an air number $\lambda$ of 0.95 (air number = the ratio of the actual amount of oxygen available to the minimum amount of oxygen theoretically required for stoichiometrically complete combustion). If, however, based on DE 10 2011 121 153 A, further oxygen was added to the carrier gas OMCTS stream, this would inevitably lead to an increase in the air number and the skilled person will assume that the advantages described in DE 10 2011 121 153 A are not achieved. In addition, the higher buildup rate in DE 10 2011 121 153 A is due to the reduced average gas velocity caused by less oxygen addition and, consequently, to a longer residence time of the $SiO_2$ particles in the vicinity of the deposition surface.

Overall, the prior art processes are still in need of improvement with respect to the deposition efficiency of the silicon-containing starting material, and there is therefore a need for a synthetic fused silica manufacturing process that can improve the deposition efficiency of the silicon-containing starting material. Improved deposition efficiency is accompanied by low manufacturing costs for the synthetic fused silica.

According to the invention, this task is now solved by a process for the production of synthetic quartz glass, which is initially characterized by the following process steps:

(1) evaporating a feedstock containing at least one organosilicon starting compound to form a feedstock vapor;

(2) feeding the feedstock vapor from process step (1) to a reaction zone in which the feedstock vapor is combusted in a flame in the presence of oxygen and is converted to $SiO_2$ soot particles by oxidation and/or by hydrolysis;

(3) depositing the $SiO_2$ soot particles resulting from process step (2) on a deposition surface to form a soot body; and

(4) if necessary, drying and vitrifying the soot body resulting from process step (3) to form synthetic fused silica, wherein the conversion of the feedstock vapor to be carried out in process step (2) is carried out at an air number in the burner of less than or equal to 1.00, whereby the process step (2) is carried out by means of a burner having a concentric cross-section comprising a feed stream nozzle, a separation gas nozzle and a nozzle for oxygen-containing gas, wherein the feedstock vapor is introduced together with oxygen as feed-mix into the burner flame and the feed-mix is separated from the oxygen-containing oxidizing gas by the non-oxidizing separation gas.

In the context of the present invention, the feedstock vapor is used in process step (2) optionally with one or more additional auxiliary gases.

According to the invention, it is thus provided that the gas flows in the burner of the device according to the invention, i.e. the ratio of oxygen from the burner (including feed oxygen) to all combustible materials actively supplied to the burner (i.e. under pressure), are adjusted in such a way that an air number for all gases actively supplied to the burner (i.e. under pressure) of less than or equal to 1 is realized.

The air number $\lambda$ is defined as the ratio of the actual amount of oxygen available to the minimum amount of oxygen theoretically required for stoichiometrically complete combustion.

In the context of the present invention, the total amount of oxygen used (at most) stoichiometrically for the reaction of the organosilicon starting compound and the auxiliary gas ($H_2$) in the burner is understood to be the amount of oxygen which is actively supplied to the burner under pressure. From this definition of the total amount of oxygen it follows that the amount of oxygen which is passively (i.e. unpressurized) supplied to the burner is not added to the total amount of oxygen provided according to the invention. In particular, this excludes oxygen which diffuses into the flame from the atmosphere surrounding the burner during combustion of the organosilicon starting compound.

In addition, the amount of oxygen used (at most) stoichiometrically to convert the organosilicon starting compound and, if necessary, the combustible auxiliary gases in the burner is understood to be the total amount of oxygen supplied centrally to the burner.

The term oxygen fed centrally to the burner in a concentric burner means the amount of total oxygen actively leaving the burner in a surface region on the flame side of the burner, the surface region being formed by a substantially circular area having a radius r, where the radius r extends perpendicular to the direction of the bait-rod axis of rotation from the center of the material nozzle or the center of the material nozzle ensemble (nozzle(s) for feeding the organosilicon starting compound), and the radius r corresponds to about 1/5 of the mean distance of the material nozzle(s) from the deposition surface of the formed soot body.

The term oxygen supplied centrally to the burner is understood to mean, in a linear burner, that quantity of total oxygen which, on the flame side of the burner, actively leaves it in a surface region, the surface region being formed by a surface, which has a distance d perpendicular to the direction of the bait-rod axis of rotation from the center of the material nozzle or the center line of the material nozzle ensemble (nozzle(s) for feeding the organosilicon starting compound), and the distance d corresponds to about 1/5 of the average distance of the material nozzle(s) from the deposition surface of the formed soot body.

The (at most) stoichiometric use of oxygen is preferably maintained during the complete buildup time of the soot body, where the build-up time is understood as the time taken to feed the organosilicon starting compound into the process according to the invention

$$t_{\text{build-up time}} = \Delta t_{\text{Start} - \text{end of feed of silicon-containing starting compound}}$$

In the context of the present invention, the deposition efficiency is given by the quotient of the weight of the generated soot body and the calculated maximum amount of $SiO_2$ that can be generated, assuming complete conversion of the silicon from the starting organosilicon compound used.

In the context of the present invention, the application of an air number of less than or equal to 1 during combustion results in the technical effects discussed below.

The use of a rich combustion mixture (accompanied by an air number of less than or equal to 1) leads to later, local ignition only of the peripheral areas of the flame, into which enough burner gas $O_2$ has already diffused from the outer nozzle(s). The core area of the flame is more unwilling to ignite due to the mixture being too rich. As a result, only a smaller volume of gas ignites at the same time and the oxygen must first diffuse in. This prevents the expansion of hot combustion gases from areas that have ignited into other flame areas and makes the flame less turbulent.

In the process according to the invention, the gas volume, which has a combustible mixture, extends far upwards and has a lower lateral expansion. This results in a more laminar flame. The associated effect is that the narrower, more laminar flame attaches itself better to the soot body and forms a more stable stagnation point directly below the soot body. This leads to shorter diffusion paths for the $SiO_2$ particles to the deposition surface of the soot body and increases the residence time at the stagnation point, resulting in higher deposition efficiency overall.

Furthermore, the substoichiometric use of oxygen additionally results in a yellow glowing flame soul of carbon black with an oxygen deficiency in the center of the flame.

The process according to the invention is in particular an Outside Vapor Deposition Method (OVD) process, Vapor Axial Deposition (VAD) process or a Soot-Boule process. Corresponding OVD and VAD processes are sufficiently known to those skilled in the art, and a Soot-Boule process is known, for example, from US 8,230,701.

The individual process steps of the method according to the invention are described in more detail below:

## Process step (1) - Evaporation of the feed material

In process step (1), a feedstock containing at least one organosilicon starting compound is vaporized to form a feedstock vapor. The organosilicon starting compound is preferably a polyalkylsiloxane compound.

In principle, any polyalkylsiloxane compound suitable for the production of synthetic silica glass can be used according to the invention. In the context of the invention, the term polyalkylsiloxane encompasses both linear (including branched structures) and cyclic molecular structures.

Particularly suitable cyclic representatives are polyalkylsiloxanes with the general empirical formula

$$Si_p O_p (R)_{2p},$$

where p is an integer greater than or equal to 3. The radical "R" is an alkyl group, in the simplest case a methyl group.

Polyalkylsiloxanes are characterized by a particularly high silicon content per weight fraction, which contributes to the economy of their use in the production of synthetic fused silica.

The polyalkylsiloxane compound is preferably selected from the group consisting of hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8) and their linear homologues and any mixtures of the above compounds. The notation D3, D4, D6, D7 and D8 is taken from a notation introduced by General Electric Inc. in which "D" represents the group $[(CH_3)_2Si]$-O-.

Mixtures of the above polyalkylsiloxane compounds may also be used within the scope of the present invention.

Because of its large-scale availability in high purity, octamethylcyclotetrasiloxane (OMCTS) is currently preferred. In the context of the present invention, it is therefore particularly preferred if the polyalkylsiloxane compound is octamethylcyclotetrasiloxane (D4).

In principle, it is possible for the feedstock to be subjected to purification before being introduced into process step (1). Such purification processes are known to the skilled person. In a preferred embodiment, however, the feedstock is not subjected to an upstream purification process beforehand.

Evaporation of the feedstock can take place with or without the presence of a carrier gas component. Preferably, the evaporation of the feedstock takes place in the presence of a carrier gas, since this allows the evaporation to take place at temperatures below the boiling point of the organosilicon starting compound. This means that the feedstock vapor preferably additionally comprises a carrier gas. Such an approach is preferred if the evaporation of the feedstock is to take place below its boiling point. The inert gas is preferably chemically inert and is preferably nitrogen or argon. In this case, the molar ratio of the organosilicon starting compound to the carrier gas is preferably in the range from 0.01 to 2, particularly preferably in the range from 0.02 to 1.5 and most preferably in the range from 0.05 to 1.25. In particular, it is preferred that nitrogen with moisture content < 40 ppm by volume is used as the carrier gas and OMCTS is used as the organosilicon starting compound. It is further preferred that the molecular ratio of OMCTS to nitrogen is in the range of 0.015 to 1.5.

The evaporation step is known to those skilled in the art. Depending on the selected molecular ratio of the organosilicon starting compound and the carrier gas, the organosilicon starting compound is converted into a vapor phase, preferably at temperatures between 120 and 200 °C. The evaporation temperature in the evaporation chamber should always be at least a few degrees above the dew point of the organosilicon starting compound. The dew point is in turn dependent on the selected molecular ratio of organosilicon starting compound and carrier gas. In a preferred embodiment, this is achieved by preheating the organosilicon starting compound to temperatures between 40 and 120 °C prior to evaporation and then spraying it into an evaporation chamber that has a higher temperature than the preheating of the feedstock. In a preferred embodiment, the inert carrier gas can additionally be preheated to temperatures of up to 250 °C before being fed to the evaporation chamber. It is advantageous that the temperature in the evaporation chamber is always on average above the dew point temperature of the mixture of organosilicon starting compound and carrier gas. Suitable evaporation processes are described, for example, in international patent applications WO 2013/087751 A and WO 2014/187513 A and German patent application DE 10 2013 209 673 A.

In the context of the invention, the term "dew point" describes the temperature at which a state of equilibrium is reached between condensing and evaporating liquid.

When using temperatures below the boiling point of the feedstock, evaporation preferably occurs together with an inert carrier gas.

In the context of the present invention, "evaporation" is understood to be the process by which the feedstock is essentially converted from the liquid phase to a gaseous phase. This is preferably done by using temperatures, as described above, which are above the dew point of the organosilicon starting compound as the main component of the feedstock. The skilled person is aware that, from a process engineering point of view, it cannot be ruled out that small liquid droplets of the feedstock may be entrained. Thus, in process step (1), a feedstock vapor is preferably generated which preferably contains not less than 97 mol%, preferably not less than 98 mol%, particularly preferably not less than 99 mol%, very particularly preferably not less than 99.9 mol% of gaseous components.

The vaporous organosilicon starting compound or a mixture of carrier gas and vaporous organosilicon starting compound is usually taken from the evaporation chamber and fed into a burner. Before being fed into the burner, the vaporous material or the mixture of vaporous material and carrier gas is preferably mixed with oxygen. In the flame, the organosilicon starting compound is oxidized to $SiO_2$. Fine-particle, amorphous $SiO_2$ ($SiO_2$ soot) is formed, which is deposited in the form of a porous mass first on the surface of a carrier and later on the surface of the forming soot body.

<u>Process step (2) - feeding the feedstock vapor to a reaction zone in which the feedstock vapor is burned in a flame in the presence of oxygen and is converted to $SiO_2$ soot particles by oxidation and/or by hydrolysis</u>

In process step (2), the gaseous feedstock vapor resulting from process step (1) is fed to a reaction zone in which the feedstock vapor is converted to $SiO_2$ particles by oxidation and/or by hydrolysis.

This process step corresponds in particular to the known soot process. The possible design of this general process is known to the skilled person.

For the combustion of the feedstock vapor, a concentric burner is used, which has gas outlet nozzles arranged in a circle around the center of the burner mouth.

According to the invention, it has been found that usually lowering the air number is not sufficient to achieve the desired deposition efficiency and, at the same time, to obtain a soot body that is substantially free of carbon deposits. For example, if the air number in the process according to DE 10 2011 121 153 A is lowered below the air number applied therein in the embodiments, a soot body is obtained that has an excessive amount of carbon deposits. Therefore, the present invention - in fundamental difference to the disclosure of DE 10 2011 121 153 A - preferably proposes at least one further process modification, which is explained below.

The center nozzle (inner nozzle) in the burner to be used according to the present invention is usually used to feed the feedstock vapor, which is usually used premixed with a carrier gas in the context of the present invention. In addition, oxygen is added to the feedstock vapor, so that a feed stream results from the center nozzle of the concentric burner usually used, which, in addition to the feedstock vapor, also contains the carrier gas and oxygen.

In the present invention, the organosilicon starting compound is fed into the burner together in a feed with oxygen.

By this modified method compared to the disclosure of DE 10 2011 121 153 A, it is possible to reduce the air number in the generic process below the range defined in the prior art and thus to increase the yield efficiency without simultaneously obtaining a soot body that has an excessive amount of carbon deposits.

Thus, this preferred method according to the invention differs considerably from the method described in DE 10 2011 121 153 A, which recommends using a rich fuel mixture, i.e. an excess of $SiO_2$ starting compound and thus an undersupply of oxygen, but does not contain any disclosure on how to avoid the increased carbon deposition on the soot body caused at the same time. The skilled person who, starting from the teaching of DE 10 2011 121 153 A, would like to improve the deposition efficiency of the generic process would reduce the burner oxygen even further, but would then fail due to the excessive amount of unburned carbon in the soot body. The realization of low air numbers according to the invention is only possible by adding additional oxygen to the feed stream with an overall reduced total amount of oxygen.

Burner shapes other than a concentric burner can also be used (not according to the invention); in these cases, in accordance with the foregoing new findings, the organosilicon starting compound is preferably mixed with oxygen, optionally together with a carrier gas, and fed into the burner chamber (regardless of the location of the feed of the organosilicon starting compound).

The center nozzle of the burner (inner nozzle) is usually encompassed by a second nozzle concentrically arranged around the center nozzle, from which a separation gas is introduced into the burner. This separation gas separates the oxygen-containing $SiO_2$ starting compound from the further oxygen stream entering the burner from another concentric nozzle arranged concentrically around the center nozzle and the separation gas nozzle.

Preferably, a gas is used as the separation gas, which generally contains more than 5% hydrogen by volume, in particular more than 10% hydrogen by volume, in particular more than 20% hydrogen by volume, in particular more than 30% hydrogen by volume, in particular more than 40% hydrogen by volume, in particular more than 50% hydrogen by volume, in particular more than 60 % hydrogen by volume, in particular more than 70 % hydrogen by volume, in particular more than 80 % hydrogen by volume, in particular more than 90 % hydrogen by volume, in particular more than 95 % hydrogen by volume, in particular more than 98 % hydrogen by volume, in particular more than 99 % hydrogen by volume.

Preferably, essentially pure hydrogen is used as the separation gas.

Within the scope of the present invention, it may be provided that the distance between the burner and the surface of the soot body is adjusted during the deposition process. For this purpose, it is in principle possible to change the position of the burner and/or the soot body, whereby in a preferred embodiment, the burner is moved while the position of the axis of rotation of the soot body remains stationary.

In the case of a deposition torch with nozzles flush with the torch mouth, the distance between the deposition torch and the deposition surface of the soot particles is defined as the shortest distance between the torch mouth and the surface of the soot body being formed. Otherwise, this distance is defined as the shortest distance between the nozzle orifice of the nozzle through which the most important glass starting material in terms of quantity is passed and the surface of the soot body being formed. This is usually the central nozzle (middle nozzle) of a preferably used concentric burner shape.

The $SiO_2$ soot particles produced by means of the deposition torch are usually deposited on a carrier tube rotating about its longitudinal axis, so that the soot body is built up layer by layer. For this purpose, the deposition torch can be moved back and forth along the longitudinal axis of the carrier tube between two turning points. In addition, the use of a burner block in which several deposition burners with each having one flame are located is preferred. In the case of the use of a burner block, at least one of the burners is operated in accordance with the present invention, preferably all of the burners, i.e. that the air number according to the invention is maintained for at least one of the burners, preferably for all of the burners, and that the distance between each of the burners and the surface of the soot body is adjusted in accordance with the consideration according to the invention for at least one of the burners, preferably for all of the burners.

In the context of the present invention, as already described at the outset, it was found that it is favorable for the deposition efficiency if the air number, i.e. the ratio of oxygen to feedstock, is less than or equal to 1. According to the invention, it is therefore further preferred that oxygen is used in process step (2) preferably sub-stoichiometrically in relation to the feedstock vapor to be hydrolyzed and/or polymerized and any combustible auxiliary gases.

In particular, preferred air numbers in the process according to the invention are less than or equal to 0.95, even more preferred less than or equal to 0.90, even more preferred less than or equal to 0.85, even more preferred less than or equal to 0.80, even more preferred less than or equal to 0.78, even more preferred less than or equal to 0.76.

The above air number is preferably maintained during at least 20%, more preferably at least 30%, even more preferably at least 40%, even more preferably at least 50%, even more preferably at least 60%, even more preferably at least 70%, even more preferably at least 80%, even more preferably at least 90%, even more preferably at least 95%, even more preferably at least 97%, even more preferably at least 98%, even more preferably at least 99%, of the previously defined build-up time in the process according to the invention.

DE 10 2011 121 153 A discloses 0.952 as the smallest concrete air number in the quartz glass production described therein. The skilled person would therefore not expect that lower air numbers, which are accompanied by a significantly greater oxygen deficiency than disclosed in DE 10 2011 121 153 A, would lead to the efficiency increases in the deposition of $SiO_2$ particles according to the invention, and that the efficiency increases can be achieved even though the stream of organosilicon starting compound fed into the burner is additionally enriched with oxygen.

The lowered ignition capability in the overall richer gas arrangement additionally causes a reduction in the average diameter of the gas regions that ignite simultaneously (smaller "flamelets"). The reduced volume increase due to thermal expansion and mole gain (for example, 1 mole of OMCTS gas produces x times the number of moles of combustion gases) due to decomposition produces smaller pressure waves that make the flame less turbulent. This results in a more laminar flame with a longer burnout length with the advantages described earlier. It must be taken into account that in the burner and flame center in the process according to the invention, only feed stream and hydrogen are present, which together are too rich to ignite quickly, and that the oxygen from the outer nozzle reaches the center later, distributed over a longer distance, because of lower turbulence.

Since, in the context of the present invention, the feedstock is preferably discharged into the combustion zone together with a carrier gas and oxygen from the center nozzle of the preferably concentric burner, it must be taken into account that the amount of oxygen used to calculate the air number results from the admixture of oxygen into the stream of feedstock and the additional oxygen used as fuel gas.

Within the scope of the process according to the invention, the air number can be reduced significantly below the value defined by DE 10 2011 121 153 A and, at the same time, the deposition efficiency can be significantly increased.

At an exemplary air number of 0.85, the oxygen deficit in the process according to the invention is three times higher (15 %) and at an exemplary air number of 0.75 it is five times higher (25 %) than in the process known from DE 10 2011 121 153 with an air number of 0.95 and an oxygen deficit of only 5 %.

Furthermore, the process according to the invention is preferably characterized by having a certain particle size distribution of the excess soot, which can then preferably be used for secondary products.

### Process step (3) - Deposition of the $SiO_2$ particles

In process step (3), the $SiO_2$ particles resulting from process step (2) are deposited on a deposition surface. The design of this process step is within the skill and knowledge of the person skilled in the art.

For this purpose, the $SiO_2$ particles formed in process step (2) are deposited layer by layer on a rotating carrier to form a porous soot body.

During the deposition of the soot particles, the distance between the torch and the support material is changed, if necessary, in order to fulfill the condition described earlier.

### Process step (4) - drying and vitrification, if necessary

In process step (4), the $SiO_2$ particles resulting from process step (3) are dried and vitrified, if necessary, to form synthetic quartz glass. This process step is particularly necessary if the previously performed process steps were carried out according to a soot process. The design of this process step is within the skill and knowledge of the person skilled in the art.

The process according to the invention is suitable for the production of synthetic fused silica, which is carried out as an external or internal deposition process. If the process according to the invention is carried out as an external deposition process, it is preferably an OVD process (Outside Vapour Phase Deposition), VAD process (Vapour Phase Axial Deposition) or Soot-Boule process.

The process according to the invention can reduce the manufacturing costs for quartz glass.

The present application further describes an apparatus for producing synthetic silica glass, wherein the apparatus (not according to the invention) comprises:

(a) at least one evaporator zone for evaporating at least one feedstock containing at least one organosilicon starting compound to form a feedstock vapor, the evaporation zone comprising an evaporation unit;

(b) at least one reaction zone into which the feedstock vapor from process step (a) is fed and in which the feedstock is converted to $SiO_2$ particles by pyrolysis or by hydrolysis, the reaction zone comprising a burner; and

(c) at least one deposition zone comprising a deposition zone for the $SiO_2$ particles resulting from the reaction zone (b) to form synthetic fused silica, wherein the deposition zone comprises a soot body.

The device (not according to the invention) is then characterized in that the burner has a nozzle which is designed in such a way that

- through the nozzle the feedstock vapor is fed together with oxygen into the reaction zone, and

- the apparatus comprises means with which the quantity ratio of oxygen to the silicon-containing starting compound can be adjusted in such a way that the reaction of the feedstock vapor to be realized is carried out at an air number in the burner of less than or equal to 1.00.

In accordance with the above explanations concerning the process according to the present invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.95 is realized.

For the definition of the air number, it is referred to the above given explanations.

In the context of the present invention, the feedstock vapor may additionally be used with a carrier gas.

In accordance with the above explanations concerning the process according to the invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.90 is realized.

In accordance with the above explanations concerning the process according to the invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.85 is realized.

In accordance with the above explanations concerning the process according to the invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.80 is realized.

In accordance with the above explanations concerning the process according to the invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.78 is realized.

In accordance with the above explanations concerning the process according to the invention, the gas flows in the burner of the apparatus (not according to the invention), in particular the amount of oxygen as fuel and of organosilicon starting compound and possibly combustible auxiliary gases, are preferably adjusted so that an air number smaller than or equal to 0.76 is realized.

The device (not according to the invention) is preferably designed such that the air number is preferably maintained during at least 20%, further preferably at least 30%, still further preferably at least 40%, still further preferably at least 50%, still further preferably at least 60%, still further preferably at least 70%, still further preferably at least 80%, still further preferably at least 90%, still further preferably at least 95%, still further preferably at least 97%, still further preferably at least 98%, still further preferably at least 99%, of the previously defined build-up time.

The burner of the apparatus (not according to the invention) preferably has a concentric cross-section, wherein inside the concentric cross-section the feedstock vapor is introduced into the burner flame together with oxygen (and inert gas as carrier gas) as feed-mix, and the feed-mix is separated from the oxygen-containing fuel gas by a separating gas.

## Example

The invention is explained in more detail below with reference to the following examples and drawing.

Example according to the invention

Liquid feedstock OMCTS together with nitrogen as carrier gas, which has been preheated to 180 °C, is vaporized at 170 °C in an evaporator according to the embodiment of international patent application PCT/EP2012/075346. The nitrogen-OMCTS vapor mixture is introduced into a concentric burner together with oxygen (O$_2$ mix), and the experiments are carried out under the following conditions:
Experiments 1 through 3, an identical amount of OMCTS per hour was introduced into the burner, with the amount of O$_2$ mix and O$_2$ burn adjusted to realize the air number listed in the table below. The amount of H$_2$ and N$_2$ was also identical. The distance between the burner and the body was also identical in all experiments.

|  | Comparison test 1 | Try 1 | Try 2 | Try 3 |
|---|---|---|---|---|
| OMCTS (kg/h) | constant | constant | constant | constant |
| Air number λ | 1,23 | 1,00 | 0,81 | 0,78 |
| Efficiency | - | + | ++ | +++ |

Meaning:

-     poor deposition efficiency

+:    improved deposition efficiency

++:   Significantly improved deposition efficiency

+++:  greatly improved deposition efficiency

Tests 1 to 3 and the comparative example show that the yield efficiency of the generic process can be increased by reducing the air number, i.e. with an increasingly sub-stoichiometric ratio of oxygen to the silicon-containing starting compound and possibly combustible auxiliary gases. In particular, air ratios are preferred which are significantly lower than the ratios of oxygen to silicon-containing starting compound and possibly combustible auxiliary gases known from DE 10 2011 121 153 A.

In the experiments described above, a concentric burner is used, with the so-called feed mixture being introduced into the burner area through the inner nozzle. The feed mixture consists of the polymerizable polyalkylsiloxane compound OMCTS, an N$_2$ carrier gas and an O$_2$ mix. The inner nozzle of the burner is encompassed by a central nozzle concentric around the inner nozzle, from which H$_2$ gas enters the burner region as a separation gas. In the outer concentric nozzle, oxygen is introduced as a burning agent (O$_2$ burning).

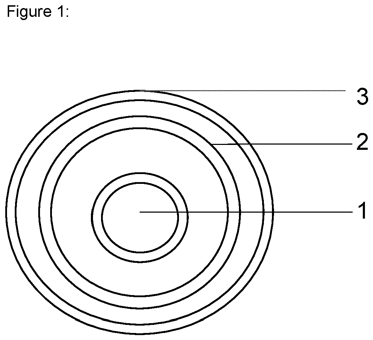

The burner geometry used in this embodiment is shown in Figure 1, in which are represented as:

1: the inner nozzle;

2: the middle nozzle; and

3: the outer nozzle

Comparison test

Starting from test 4 according to Table 1 of DE 10 2011 121 153 A, the air number was reduced below the value of 0.952 in a comparative test. In this comparative test, no oxygen is fed into the burner together with OMCTS in the central feed nozzle. The soot bodies obtained were unusable due to an excessively high carbon content.

**Claims**

**1.** Process for producing synthetic quartz glass, **characterized by** the following process steps:

(1) evaporating a feedstock containing at least one organosilicon starting compound to form a feedstock vapor;

(2) feeding the feedstock vapor to a reaction zone in which the feedstock vapor is burned in a flame in the presence of oxygen and is converted to $SiO_2$ soot particles by oxidation and/or by hydrolysis;

(3) depositing the $SiO_2$ soot particles resulting from process step (2) on a deposition surface to form a soot body; and

(4) if necessary, drying and vitrification of the $SiO_2$ particles resulting from process step (3) to form synthetic fused silica;

**characterized in that**

the conversion of the feedstock vapor to be carried out in process step (2) is carried out at an air number in the burner of less than or equal to 1.00, whereby the process step (2) is carried out by means of a burner having a concentric cross-section comprising a feed stream nozzle, a separation gas nozzle and a nozzle for oxygen-containing gas, wherein the feedstock vapor is introduced together with oxygen as feed-mix into the burner flame and the feed-mix is separated from the oxygen-containing oxidizing gas by the non-oxidizing separation gas.

2. Process according to claim 1, **characterized in that** the flame used in process step (2) for combustion of the feedstock vapor has an air number of 0.95 or less.

3. Process according to claim 1 or 2, **characterized in that** the flame used in process step (2) for combustion of the feedstock vapor has an air number of 0.85 or less.

4. Process according to any one of claims 1 to 3, **characterized in that** the organosilicon starting compound is fed into the burner together in a feed with oxygen.

5. Process according to any one of claims 1 to 4, **characterized in that** the separation gas contains more than 5% hydrogen by volume.

6. Process according to any one of claims 1 to 5, **characterized in that** the organosilicon starting compound is selected from the group consisting of hexamethylcyclotrisilox-ane (D3), octamethylcyclotetrasiloxane (D4), decamethylcyclopentasiloxane (D5), dodecamethylcyclohexasiloxane (D6), tetradecamethylcycloheptasiloxane (D7), hexadecamethylcyclooctasiloxane (D8), their linear homologues and any mixtures of the above compounds.

7. Process according to any one of claims 1 to 6, **characterized in that** the total amount of oxygen used to react the organosilicon starting compound and optionally combustible auxiliary gases in the burner is the amount of oxygen actively supplied to the burner.

**Patentansprüche**

1. Verfahren zum Herstellen von synthetischem Quarzglas, **gekennzeichnet durch** die folgenden Verfahrensschritte:

(1) Verdampfen eines Einsatzstoffes, der mindestens eine siliciumorganische Ausgangsverbindung enthält, um einen Einsatzstoffdampf zu bilden;

(2) Zuführen des Einsatzstoffdampfes in eine Reaktionszone, in der der Einsatzstoffdampf in einer Flamme in der Gegenwart von Sauerstoff verbrannt und durch Oxidation und/oder Hydrolyse in $SiO_2$-Rußpartikel umgewandelt wird;

(3) Abscheiden der aus Verfahrensschritt (2) resultierenden $SiO_2$-Rußpartikel auf einer Abscheidungsober-fläche, um einen Rußkörper zu bilden; und

(4) falls erforderlich, Trocknen und Verglasen der aus Verfahrensschritt (3) resultierenden $SiO_2$-Partikel, um synthetisches Quarzglas zu bilden;

**dadurch gekennzeichnet, dass**

die Umwandlung des Einsatzstoffdampfes, die in Verfahrensschritt (2) ausgeführt werden soll, bei einer Luftzahl in dem Brenner von kleiner als oder gleich 1,00 ausgeführt wird, wobei der Verfahrensschritt (2) mittels eines Brenners, der einen konzentrischen Querschnitt aufweist, ausgeführt wird, umfassend eine Zustromdüse, eine Trenngasdüse und eine Düse für sauerstoffhaltiges Gas, wobei der Einsatzstoffdampf zusammen mit Sauerstoff als Einsatzstoffgemisch in die Brennerflamme eingebracht wird und das Einsatzstoffgemisch durch das nicht oxidierende Trenngas von dem sauerstoffhaltigen oxidierenden Gas getrennt wird.

**2.** Verfahren nach Anspruch 1, **dadurch gekennzeichnet, dass** die Flamme, die in Verfahrensschritt (2) für Verbrennung des Einsatzstoffdampfes verwendet wird, eine Luftzahl von 0,95 oder weniger aufweist.

**3.** Verfahren nach Anspruch 1 bis 2, **dadurch gekennzeichnet, dass** die Flamme, die in Verfahrensschritt (2) für Verbrennung des Einsatzstoffdampfes verwendet wird, eine Luftzahl von 0,85 oder weniger aufweist.

**4.** Verfahren nach einem der Ansprüche 1 bis 3, **dadurch gekennzeichnet, dass** das die siliciumorganische Ausgangsverbindung zusammen in einem Zustrom mit Sauerstoff in einen Brenner zugeführt wird.

**5.** Verfahren nach einem der Ansprüche 1 bis 4, **dadurch gekennzeichnet, dass** das Trenngas zu mehr als 5 Vol.-% Wasserstoff enthält.

**6.** Verfahren nach einem der Ansprüche 1 bis 5, **dadurch gekennzeichnet, dass** die siliciumorganische Ausgangsverbindung ausgewählt ist aus der Gruppe bestehend aus Hexamethylcyclotrisiloxan (D3), Octamethylcyclotetrasiloxan (D4), Decamethylcyclopentasiloxan (D5), Dodecamethylcyclohexasiloxan (D6), Tetradecamethylcycloheptasiloxan (D7), Hexadecamethylcyclooctasiloxan (D8), deren linearen Homologen und beliebigen Mischungen der vorgenannten Verbindungen.

**7.** Verfahren nach einem der Ansprüche 1 bis 6, **dadurch gekennzeichnet, dass** die Gesamtmenge an Sauerstoff, die verwendet wird, um die siliciumorganische Ausgangsverbindung und optional brennbare Hilfsgase in dem Brenner zu reagieren, die Menge an Sauerstoff ist, die dem Brenner aktiv zugeführt wird.

**Revendications**

**1.** Procédé de production de verre de quartz synthétique, **caractérisé par** les étapes de procédé suivantes :

(1) évaporation d'une charge d'alimentation contenant au moins un composé organosilicié de départ pour former une vapeur de charge d'alimentation ;
(2) introduction de la vapeur de charge d'alimentation dans une zone de réaction dans laquelle la vapeur de charge d'alimentation est brûlée dans une flamme en présence d'oxygène et est convertie en particules de suie de $SiO_2$ par oxydation et/ou par hydrolyse ;
(3) dépôt des particules de suie de $SiO_2$ résultant de l'étape (2) de procédé sur une surface de dépôt pour former un corps de suie ; et
(4) si nécessaire, séchage et vitrification des particules de $SiO_2$ résultant de l'étape (3) de procédé pour former de la silice synthétique fondue ;

**caractérisé en ce que**
la conversion de la vapeur de charge d'alimentation à mettre en oeuvre à l'étape (2) de procédé est mise en oeuvre à un indice d'air dans le brûleur inférieur ou égal à 1,00, moyennant quoi l'étape (2) de procédé est mise en oeuvre au moyen d'un brûleur ayant une section transversale concentrique comprenant une buse de courant d'alimentation, une buse de gaz de séparation et une buse pour un gaz contenant de l'oxygène, dans lequel la vapeur de charge d'alimentation est introduite conjointement avec de l'oxygène en tant que mélange d'alimentation dans la flamme de brûleur et le mélange d'alimentation est séparé du gaz oxydant contenant de l'oxygène par le gaz de séparation non oxydant.

**2.** Procédé selon la revendication 1, **caractérisé en ce que** la flamme utilisée à l'étape (2) de procédé pour la combustion de la vapeur de charge d'alimentation a un indice d'air de 0,95 ou moins.

**3.** Procédé selon la revendication 1 ou 2, **caractérisé en ce que** la flamme utilisée à l'étape (2) de procédé pour la combustion de la vapeur de charge d'alimentation a un indice d'air de 0,85 ou moins.

**4.** Procédé selon l'une quelconque des revendications 1 à 3, **caractérisé en ce que** le composé organosilicié de départ est introduit dans le brûleur conjointement avec une alimentation avec de l'oxygène.

**5.** Procédé selon l'une quelconque des revendications 1 à 4, **caractérisé en ce que** le gaz de séparation contient plus de 5 % d'hydrogène en volume.

**6.** Procédé selon l'une quelconque des revendications 1 à 5, **caractérisé en ce que** le composé organosilicié de départ est choisi dans le groupe constitué d'hexaméthylcyclotrisiloxane (D3), octaméthylcyclotétrasiloxane (D4), décaméthylcyclopentasiloxane (D5), dodécaméthylcyclohexasiloxane (D6), tétradécaméthylcycloheptasiloxane (D7), hexadécaméthylcyclooctasiloxane (D8), leurs homologues linéaires et tous mélanges des composés ci-dessus.

**7.** Procédé selon l'une quelconque des revendications 1 à 6, **caractérisé en ce que** la quantité totale d'oxygène utilisée pour faire réagir le composé organosilicié de départ et des gaz auxiliaires facultativement combustibles dans le brûleur est la quantité d'oxygène activement introduite dans le brûleur.

Figure 1:

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9010596 A
- EP 3549921 A
- EP 0622340 A
- WO 9920574 A
- US 20190084866 A
- DE 102011121153 A
- US 8230701 B
- WO 2013087751 A
- WO 2014187513 A
- DE 102013209673 A
- DE 102011121153
- EP 2012075346 A